# EUROPEAN PATENT SPECIFICATION

(11) **EP 0 267 162 B1**
(45) Date of publication and mention of the grant of the patent: **10.03.1993**
(21) Application number: 87830293.4
(22) Date of filing: 29.07.1987
(51) Int. Cl.: F16K 31/06

(54) **Pressure-regulating solenoid valve, particularly for high-pressure circuits of fuel injection systems for internal combustion engines**
Druckregelndes Magnetventil, insbesondere für Hochdruckanlagen von Einspritzsystemen für Verbrennungskraftmaschinen
Electrovannes régulant la pression, notamment pour circuits à haute pression pour systèmes d'injection de machines à combustion interne

(30) Priority: 07.11.1986 IT 5405286 U
(43) Date of publication of application: 11.05.1988
(73) Proprietor: ELASIS SISTEMA RICERCA FIAT NEL MEZZOGIORNO Società Consortile per Azioni, I-80038 Pomigliano D'Arco (IT)
(72) Inventor: Ricco, Mario, I-70125 Bari (IT); Melillo, Domenico, I-70042 Mola di Bari (Bari) (IT); Picciallo, Michele, I-70057 Palese (Bari) (IT)
(74) Representative: Bongiovanni, Guido

(56) References cited:
- DE-A- 2 201 974
- DE-B- 2 618 874
- FR-A- 1 158 844
- US-A- 2 822 818
- US-A- 4 466 779

## Description

The present invention relates to a solenoid valve, of the type disclosed in the preamble of claim 1.

A solenoid valve of the specified type is e.g. disclosed in US-A-2 822 818, which however is not a pressure-regulating valve, in the sense that it is not intended to regulate the pressure of the fluid flowing to the outlet of the valve, but is of the type with external control, opening and closure whereof is controlled only by the excitation of the solenoid.

A further solenoid valve is known from DE-A-2 201 974 which also is not of the pressure-regulating type.

The object of the present invention is to provide a small, extremely cheap pressure-regulating solenoid valve which is reliable and precise in operation and is capable of modulating pressures which are variable within a range of between 0 and 1000 bars and beyond.

This object is achieved by means of a solenoid valve as defined in claim 1.

By virtue of the claimed features, the solenoid valve of the invention is able to operate on pressures which are variable from 0 to 1000 bars and beyond, and is of small bulk and modest cost. The solenoid valve has no friction other than that caused by the transverse components of the magnetic core which is independent of the pressure and depends solely on geometrical errors between the core and the magnetic circuit, and which is in any event negligible compared to that of conventional slide valves and in any case is independent of the supply pressure. This low frictional value enables the energisation winding to be piloted with an alternating fixed component ("dither") of low magnitude (in some cases nil) and a continuous variable with which the force exerted on the ball obturator is modulated.

Moreover, in addition to the function of regulating the pressure of the circuit, the solenoid valve according to the invention also acts as an overpressure valve, as a result of the regulation of the resilient member acting on the push rod.

According to the invention, the calibrated aperture and the transverse apertures are formed in an element inserted sealingly into the body between the push rod and the inlet of the valve, a housing for the ball being defined within the element.

This housing is made so as to avoid any jamming of the ball the travel of which is limited to several tenths of a millimetre. More particularly, the symmetrical distribution of the discharge passages relative to the calibrated aperture enables the pressures acting on the ball to be distributed symmetrically, effectively preventing any jamming.

The push rod is conveniently in the form of a plate and the resilient member is constituted by a helical compression spring surrounding the shaft coaxially and reacting between the plate and the valve body.

This arrangement of the solenoid valve gives such reduced dimensions as to enable it to be fitted even in narrow spaces, particularly in small vehicles, or to allow it to be integrated in other components of the injection system.

The invention will now be described in detail with reference to the appended drawings, provided purely by way of non-limiting example, in which:
Figure 1 is a longitudinal sectional view of a pressure-regulating valve according to the invention, and
Figure 2 shows the detail of Figure 2 indicated II, on an enlarged scale.

With reference to the drawings, the pressure-regulating solenoid valve according to the invention comprises a body 1 having a lower axial opening 2 whose outer end is threaded and receives an externally-threaded tubular inlet union 3.

The inner end of the opening 2 communicates with a transverse opening 4 whose outer end opens onto a side of the body 1 and is threaded to receive an externally-threaded tubular outlet union 5.

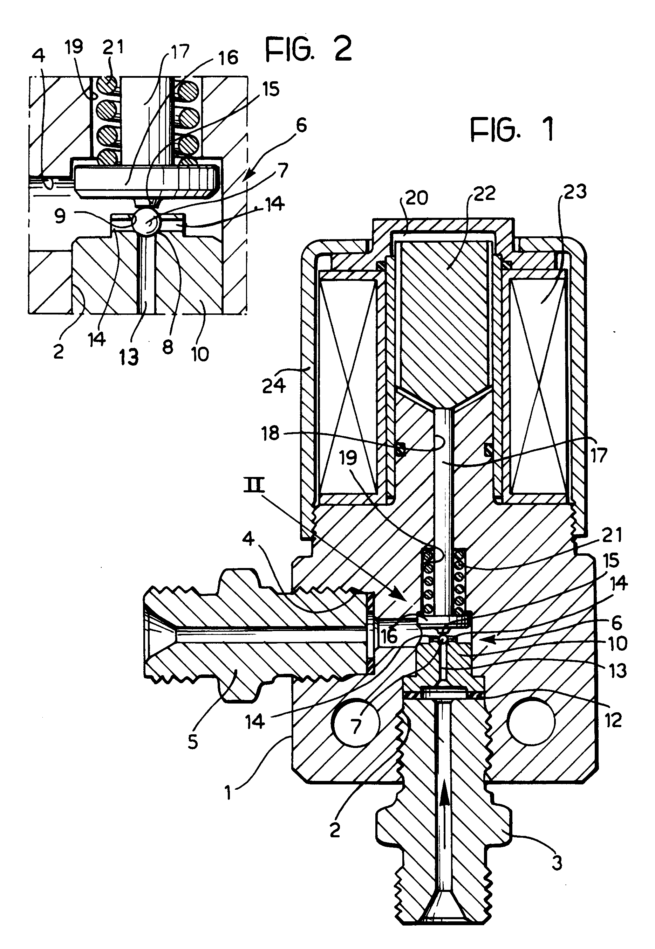

A valve 6 is located in the zone of connection between the inner ends of the openings 2 and 4 and, as illustrated in greater detail in Figure 2, includes a ball obturator 7 cooperating with an annular valve seat 8.

The ball 7 is inserted within a housing 9 formed in an element 10 inserted and sealingly clamped in correspondence with the inner end of the opening 2 by means of the inlet union 3 and a washer 12.

A calibrated axial passage 13 is formed in the element 10 and communicates at one end with the union 3 and terminates at its opposite end in correspondence with the housing 9 of the ball 7. The inner end of the calibrated passage 13 defines the annular valve seat 8.

The body 10 is also formed with a series of transverse discharge apertures 14 arranged perpendicular to the passage 13 and distributed symmetrically around the housing 9 or the ball 7. These discharge apertures 14 communicate with the transverse aperture 4 in the body 1 and hence with the outlet union 5.

A push rod 15 bears axially against the ball 7 on its side opposite the passage 13. This push rod 15 is formed in the central zone of a plate 16 fixed to a shaft 17 slidable in an axial hole 18 in the body 1, aligned with the passage 13.

The hole 18 has an internal widening 19 and an external counterbore 20. The internal widening 19 houses a helical compression spring 21 which surrounds the shaft 17 coaxially and acts between the body 1 and the plate 16 so as to press the push rod 15 against the ball 7.

A magnetic core 22 slidable in an axially guided manner within the counterbore 20 is fixed to the shaft 17 and cooperates in a conventional manner with an energisation winding or solenoid 23 arranged for connection to an electrical supply. The winding 23 is protected from the exterior by a cover, generally indicated 24, fixed to the body 1 and constituting an essential part of the magnetic circuit of the solenoid.

As already explained above, the solenoid valve according to the invention is particularly intended for modulating the pressure in high pressure circuits of fuel injection systems for internal combustion engines. In use, the inlet union 3 is connected to the high-pressure circuit and the outlet union 5 to a discharge reservoir. Communication between the two unions is controlled by the obturator 7 which is normally pressed against its seat 8 as a result of the load exerted by the spring 19, the calibration of which enables the obturator 7 to open at a predetermined pressure.

The ball 7 is also thrust against the valve seat 8 by the push rod 15 with a force which can be regulated in dependence on the energisation current of the winding 23. By virtue of the general conformation of the valve 6 and particularly the negligible amount of friction, the winding 23 may be piloted with an alternating fixed component ("dither") of low magnitude (in some cases nil) and a continuous variable with which the force exerted on the ball 7 is regulated and hence the outlet of the passage 13 to the apertures 14 through the valve seat is varied. This obviously enables the pressure in the circuit to be regulated and modulated according to predetermined values in a range of between 0 and 1000 bars and beyond.

In addition to the function of regulating the pressure of the circuit, the solenoid valve according to the invention also acts as an overpressure relief valve, as a result of the regulation of the spring 21 and the value of the maximum current applicable to the winding 23.

## Claims

1. A solenoid valve comprising a body (1) having an inlet (3) and an outlet (5), the communication of which is controlled by an obturator valve (6) whose closure can be controlled by an electromagnetic actuator (22, 23), wherein the obturator valve (6) is constituted by a ball (7) which cooperates with an annular valve seat (8) defined between a calibrated aperture (13) communicating with the inlet (3) and a series of discharge passages (14) disposed transversely of the calibrated aperture (13) and symmetrically around the ball (7) and communicating with the outlet (5), the ball being acted upon by a push rod (15) disposed on the side opposite the calibrated aperture (13) and carried by a shaft (17) slidably guided in the body (1) coaxially with the calibrated aperture (13) and to which there is fixed a movable magnetic core (22) cooperating with an energisation winding (23), the push rod (15) being also subject to the action of a resilient member (21) to press the ball (7) against the valve seat with a constant force, characterized in that said solenoid valve is a pressure regulating valve, particularly for high-pressure circuits of fuel injection systems for internal combustion engines, and in that, when the energisation winding (23) is energised, said magnetic core (22) is moved in the closing direction of the valve to press the ball (7) against the valve seat (8) with a regulatable force to controllably vary the value of the pressure at the inlet (3) of the solenoid valve at which pressure the obturator valve (6) opens.

2. Solenoid valve according to Claim 1, characterised in that the calibrated aperture (13) and the transverse passages (14) are formed in an element (10) inserted sealingly into the body (1) between the push rod (15) and the inlet (3) of the valve and the element (10) defines a housing (9) in which the ball (7) is housed.

3. Solenoid valve according to Claim 1 or Claim 2, characterised in that the push rod (15) is in the form of a plate (16), and in that the resilient member is constituted by a helical compression spring (21) surrounding the shaft (17) coaxially and reacting between the plate (16) and the body (1) of the valve.

## Patentansprüche

1. Magnetventil mit einem Körper (1), der einen Einlaß (3) und einen Auslaß (5) aufweist, deren Verbindung durch ein Sperrventil (6) gesteuert wird, dessen Schließen durch ein elektromagnetisches Stellglied (22, 23) gesteuert werden kann, wobei das Sperrventil (6) durch einen Ball (7) gebildet wird, der mit einem ringförmigen Ventilsitz (8) zusammenwirkt, der zwischen einer kalibrierten Öffnung (13), die mit dem Einlaß (3) in Verbindung steht, und einer Reihe von Ablaßdurchgängen (14), welche quer zur kalibrierten Öffnung (13) und symmetrisch um den Ball (7) herum angeordnet sind und mit dem Ausgang (5) in Verbindung stehen, definiert ist, wobei der Ball durch einen Ventilstößel (15) beaufschlagt wird, der auf der der kalibrierten Öffnung (13) entgegengesetzten Seite angeordnet ist und von einem Schaft (17) getragen wird, der gleitfähig in dem Körper (1), koaxial zu der kalibrierten Öffnung (13) geführt ist und an welchem ein beweglicher Magnetkern (22) befestigt ist und der mit einer Erregungswicklung (23) zusammenwirkt, wobei der Ventilstößel (15) auch der Wirkung eines elastischen Teils (21) unterliegt, um den Ball (7) gegen den Ventilsitz mit einer konstanten Kraft zu drücken, dadurch gekennzeichnet, daß das Magnetventil ein Druckregulierventil ist, insbesondere für Hochdruckkreise von Kraftstoffeinspritzsystemen für Verbrennungsmotoren und daß, wenn die Erregungswicklung (23) erregt wird, der Magnetkern (22) in die Schließrichtung des Ventils bewegt wird, um den Ball (7) gegen den Ventilsitz (8) mit einer regulierbaren Kraft zu drücken, um die Größe des Druckes am Einlaß (3) des Magnetventils, bei welchem Druck sich das Absperrventil öffnet, kontrollierbar zu ändern.

2. Magnetventil nach Anspruch 1, dadurch gekennzeichnet, daß die kalibrierte Öffnung (13) und die Querdurchgänge (14) in einem Teil (10) gebildet sind, das dichtend in den Körper (1) zwischen den Ventilstößel (15) und dem Einlaß (3) des Ventils eingesetzt ist, und daß das Element (10) ein Gehäuse (9) definiert, in dem der Ball (7) untergebracht ist.

3. Magnetventil nach Anspruch 1 oder 2, dadurch gekennzeichnet, daß der Ventilstößel (15) die Form einer Platte (16) hat, und daß das elastische Teil durch eine Schraubendruckfeder (21) gebildet ist, die den Schaft (17) koaxial umgibt und zwischen der Platte (16) und dem Körper (1) des Ventils wirkt.

## Revendications

1. Electro-vanne comprenant un corps (1) présentant une entrée (3) et une sortie (5), dont la communication est commandée par une soupape d'obturation (6), dont la fermeture peut être commandée par un organe d'actionnement électromagnétique (22, 23), dans lequel la soupape d'obturation est constituée par une bille (7) qui coopère avec un siège de soupape annulaire (8) défini entre une ouverture calibrée (13) communiquant avec l'entrée (3) et une série de passages d'évacuation (14) disposés de manière transversale par rapport à l'ouverture calibrée (13), et de manière symétrique autour de la bille (7), et communiquant avec la sortie (5), la bille étant actionnée par une tige de poussée (15) disposée sur le côté opposé à l'ouverture calibrée (13) et supportée par un arbre (17) guidé à coulissement dans le corps (1), de manière coaxiale avec l'ouverture calibrée (13), et auquel est fixé un noyau magnétique mobile (22) coopérant avec un enroulement d'activation (23), la tige de poussée (15) étant également soumise à l'action d'un organe élastique (21) pour presser la bille (7) contre le siège de soupape avec une force constante, caractérisée en ce que ladite électro-vanne est une soupape de régulation de pression, en particulier pour des circuits à haute pression de systèmes d'injection de carburant pour des moteurs à combustion interne, et en ce que, lorsque l'enroulement d'activation (23) est activé, ledit noyau magnétique (22) est déplacé dans la direction de fermeture de la soupape, pour comprimer la bille (7) contre le siège de soupape (8) avec une force réglable, pour faire varier de manière commandée la valeur de la pression à l'entrée (3) de l'électro-vanne pour laquelle la soupape d'obturation (6) s'ouvre.

2. Electro-vanne selon la revendication 1, caractérisée en ce que l'ouverture calibrée (13) et les passages transversaux (14) sont ménagés dans un élément (10) inséré de manière étanche dans le corps (1), entre la tige de poussée (15) et l'entrée (3) de la soupape, et l'élément (10) définissant un boîtier (9) dans lequel est logée la bille (7).

3. Electro-vanne selon la revendication 1 ou 2, caractérisée en ce que la tige de poussée (15) présente la forme d'une plaque (16), et en ce que l'organe élastique est constitué par un ressort hélicoïdal de compression (21) entourant l'arbre de manière coaxiale et réagissant entre la plaque (16) et le corps (1) de la soupape.
